Europäisches Patentamt

European Patent Office

Office européen des brevets

(19)

(11) Veröffentlichungsnummer : **0 049 414**
**B1**

# (12) EUROPÄISCHE PATENTSCHRIFT

(45) Veröffentlichungstag der Patentschrift :
13.06.84

(21) Anmeldenummer : 81107504.3

(22) Anmeldetag : 21.09.81

(51) Int. Cl.³ : **G 02 B   7/26**

(54) **Optisches Koppelelement.**

(30) Priorität : 30.09.80 DE 3036883

(43) Veröffentlichungstag der Anmeldung :
14.04.82 Patentblatt 82/15

(45) Bekanntmachung des Hinweises auf die Patenterteilung : 13.06.84 Patentblatt 84/24

(84) Benannte Vertragsstaaten :
**DE FR GB**

(56) Entgegenhaltungen :
**DE-A- 2 842 276**
**DE-A- 2 942 318**
**GB-A- 1 569 752**
**US-A- 3 780 295**

(73) Patentinhaber : **SIEMENS AKTIENGESELLSCHAFT**
**Berlin und München Wittelsbacherplatz 2**
**D-8000 München 2 (DE)**

(72) Erfinder : **Witte, Hans-Hermann, Dr.**
**Hippelstrasse 15**
**D-8000 München 82 (DE)**

EP 0 049 414 B1

**Beschreibung**

Die Erfindung betrifft ein Koppelelement zum Ein- und/oder Auskoppeln von Licht in und/oder aus Glasfasern nach dem Oberbegriff des Anspruchs 1.

Derartige Koppelelemente sind aus DE-A-2 842 276 bekannt, Sie sind einfach herzustellen und haben bereits geringe Einfügeverluste für Lichtsignale. Sie eignen sich daher besonders für den Einsatz in der optischen Nachrichtentechnik, besonders in Datenbussen, in denen aufgrund großer Entfernungen zwischen den Teilnehmern und/oder vieler am Informationsaustausch einbezogener Teilnehmer hohe Streckendämpfungen auftreten. Für den Einsatz in optischen Kommunikationssystemen werden Glasfasern des Koppelelements an die Systemfasern des optischen Kommunikationssystems angeschlossen.

Der vorliegenden Erfindung liegt die Aufgabe zugrunde, die durch das Koppelelement der eingangs genannten Art verursachten Koppelverluste beim Einsatz in einem optischen Kommunikationssystem weiter zu verringern.

Diese Aufgabe wird erfindungsgemäß dadurch gelöst, daß der Gesamtdurchmesser einer Glasfaser des Koppelelements die mit einer Systemfaser eines optischen Systems zu verbinden ist, gleich dem Kerndurchmesser dieser Systemfaser ist. Es tritt dann beim Übergang von der bzw. den ankommenden Glasfaser(n) zu den bzw. der wegführenden Glasfaser(n) im Koppelelement praktisch nur noch der aus dem Versatz der Glasfasern an der Koppelstelle im Koppelelement resultierende Verlust auf. Dieser Verlust ist rein geometrisch bedingt wegen des Versatzes der Glasfasern im Koppelelement, weil die Faserstirnflächen der ankommenden Glasfaser(n) nicht vollständig von den Faserstirnflächen der wegführenden Glasfaser(n) abgedeckt sind.

In einer besonders vorteilhaften Ausbildung der Erfindung sind die Mäntel der Glasfasern des Koppelelements möglichst dünn, wobei Schwankungen in der Mantelstärke dieser Glasfasern in der Größenordnung von 100 % zugelassen sind.

Bei der Kopplung zwischen den Glasfasern des Koppelelements und der Systemfaser tritt bei einem möglichst dünnen Mantel der Glasfasern des Koppelelements theoretisch kein Verlust mehr auf. Bei der erfindungsgemäßen Dimensionierung der Glasfasern des Koppelelements wird teilweise Licht aus dem Kern der Systemfaser in den Mantel der Glasfaser des Koppelelements eingekoppelt und dort geführt ; der Anteil dieses Lichts hängt von der Manteldicke dieser Glasfaser ab. Da die Längen der Glasfasern des Koppelelements gering sind, ist der Verlust des im Mantel geführten Lichtes entsprechend klein ; dies trifft besonders dann zu, wenn diese Glasfasern in einem optischen Kleber eingebettet sind, der einen entsprechend niedrigen Brechungsindex aufweist. Schwankungen in der Mantelstärke der Glasfasern des Koppelelements in der Größenordnung von 100 % sind erlaubt, da das im Mantel geführte Licht prozentual immernur den gleichen Verlust erleidet, und da ein doppelter geringer Verlust immer noch ein geringer Verlust ist. Dieser Sachverhalt reduziert die Anforderungen an die Herstellungstechnologie der Glasfasern mit dünnen Mänteln.

Viel wichtiger, als daß die Mäntel der Glasfasern des Koppelelements möglichst gleichmäßig dünn sind, ist die Forderung, daß die Glasfasern des Koppelements in einem optischen Kleber eingebettet sind, der möglichst homogen auf die Glasfasern aufgebracht ist. Dies ist notwendig, um eine möglichst ideale Reflexion an der Grenzfläche Mantel/Kleber zu erzielen. Wenn beim Aufbringen dieses Klebers auf die Glasfasern des Koppelelements an der Grenzfläche Glasfasermantel/Kleber Luftblasen gebildet werden, geht an dieser Grenzfläche Mantel/Kleber mehr Licht verloren, als bei Schwankungen in der Größenordnung von 100 % bei der Mantelstärke der Glasfasern des Koppelelements an Verlusten verursacht wird.

In einer vorteilhaften Ausbildung der Erfindung sind die Mäntel der Glasfasern des Koppelelements in ein Medium oder Material eingebettet, dessen Brechungsindex niedriger ist als der dieser Glasfasermäntel. Auf diese Weise können die Gesamtverluste des Koppelelements weiter gesenkt werden. Ein für diesen Zweck besonders geeignetes Medium sind optische Kleber. Vorteilhaft sind ebenso Luft und/oder Deckel/Substrat-Materialien. Werden Materialien mit gleichen thermischen Ausdehnungskoeffizienten verwendet, so werden möglicherweise Störungen oder Fehler hervorrufende Spannungen vermieden.

Die Erfindung wird anhand der Zeichnung erläutert.

Figur 1 zeigt einen Schnitt durch eine Glasfaser des Koppelelements und eine daran angeschlossene Systemfaser eines faseroptischen Kommunikationssystems längs der Faserachsen.

Figur 2 zeigt einen Querschnitt der in Figur 1 angegebenen Koppelstelle zwischen Glasfaser des Koppelelements und der Systemfaser.

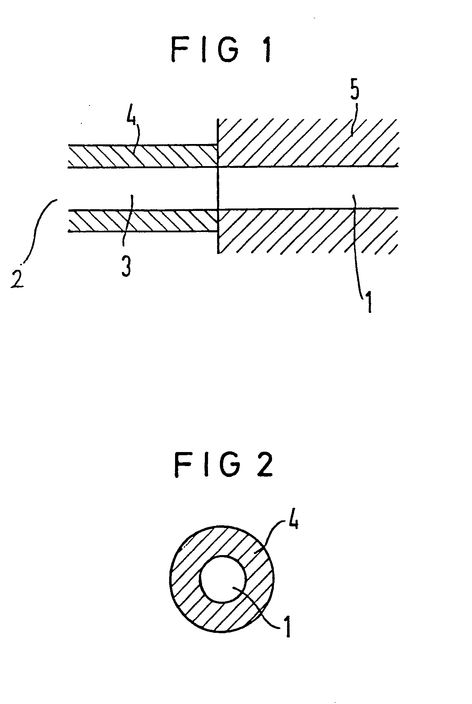

Figur 1 zeigt einen Schnitt durch eine Glasfaser 1 des Koppelelements und einer an diese Glasfaser angeschlossenen Systemfaser 2 mit dem Kern 3 und dem Mantel 4. Der Mantel der Glasfaser 1 ist wegen seiner geringen Mantelstärke nicht extra eingezeichnet. Die Mantelstärke der Glasfaser 1 beträgt weniger als 5 μm wobei Schwankungen in der Größenordnung von 100 % erlaubt sind. Der Gesamtdurchmesser der Glasfaser 1 ist gleich dem Kerndurchmesser des Kerns 3 der Systemfaser 2. Die Glasfaser 1 ist in ein Medium oder Material 5 eingebettet, das einen niedrigeren Brechungsindex aufweist als der Mantel der Glasfaser 1.

Figur 2 zeigt einen Querschnitt an der in der Figur 1 näher bezeichneten Koppelstelle zwischen der Glasfaser 1 und der Systemfaser 2. Es ist deutlich zu sehen, daß der Gesamtdurchmesser der Glasfaser 1 mit dem Kerndurchmesser der Systemfaser 2 zusammenfällt. Da der Blick bei diesem Querschnitt von der Glasfaser 1 weg zur Systemfaser 2 hingeht, ist das einbettende Medium 5 in Figur 2 nicht dargestellt.

Erfindungsgemäße Koppelelemente können nach den in der DE-A-2 842 276 angegebenen Verfahren hergestellt werden.

Die Mäntel der Glasfasern 1 des Koppelelements sollen so dünn wie möglich sein. Solche Lichtleitfasern können mit einem der folgenden Verfahren hergestellt werden :

1. CVD-Methode mit Außenabscheidung, wobei abschließend ein homogenes Material entsprechender Dicke für den Mantel auf den Lichtleitfaserkern abgeschieden wird.

2. Chemisches Ätzen des Fasermantels auf die gewünschte Dicke.

3. CVD-Methode mit Innenabscheidung von Material mit Gradientenindex-Profil als Vorform für das nachfolgende Kollabieren, wobei die Vorform auf die gewünschte Manteldicke abgeschliffen wird.

Stufenprofil-Element-Fasern mit dünnem Mantel lassen sich auch einfach über das Doppeltiegel-Verfahren herstellen.

## Ansprüche

1. Koppelelement zum Ein- und/oder Auskoppeln von Licht in und/oder aus Glasfasern, bei welchen auf einer Halterung zwei nebeneinander angeordnete Glasfasern und eine zu einer der beiden Glasfasern in Serie angeordnet dritte Glasfaser gehalten sind, wobei die beiden nebeneinander angeordneten Glasfasern längs eines bis zu einem der dritten Glaserfaser zugewandten Ende dieser beiden Glasfasern reichenden Stückes zusammengebracht sind und wobei an diesem Ende die jeweiligen Faserendflächen der beiden zusammengebrachten Glasfasern gleichzeitig an ein und dieselbe Faserendfläche der dritten Glasfaser wenigstens über einen Teil dieser Faserendflächen anstoßen, dadurch gekennzeichnet, daß der Gesamtdurchmesser einer Glasfaser (1) des Koppelelements, die mit einer Systemfaser (2) eines optischen Systems zu verbinden ist, gleich dem Kerndurchmesser dieser Systemfaser (2) ist.

2. Koppelelement nach Anspruch 1, dadurch gekennzeichnet, daß die Mantelstärke einer Glasfaser (1) des Koppelelements, die mit einer Systemfaser (2) des optischen Systems zu verbinden ist, weniger als 5 μm beträgt, wobei Schwankungen in der Mantelstärke dieser Glasfaser (1) in der Größenordnung von 100 % zugelassen sind.

3. Koppelelement nach Anspruch 1 oder 2, dadurch gekennzeichnet, daß die Glasfasern des Koppelelements in einem Medium oder Material eingebettet sind, dessen Brechungsindex niedriger ist als der dieser Glasfasermäntel.

4. Koppelelement nach Anspruch 3, dadurch gekennzeichnet, daß das Medium ein optischer Kleber ist.

5. Koppelelement nach einem der Ansprüche 1 bis 4, dadurch gekennzeichnet, daß die für das Koppelelement verwendeten Materialien annähernd den gleichen thermischen Ausdehnungskoeffizienten haben.

## Claims

1. A coupling element for the input and/or output coupling of light from glass fibres, wherein a holder has two glass fibres arranged beside one another and a third glass fibre is arranged in series with the two glass fibres, where the two glass fibres arranged beside one another are brought together along a portion which extends to an end of these two glass fibres which faces the third glass fibre, and where at this end the respective fibre end surfaces of the two converging glass fibres simultaneously abut one and the same fibre end surface of the third glass fibre at least across a section of these fibre end surfaces, characterised in that the overall diameter of a glass fibre (1) of the coupling element to be connected to a system fibre (2) of an optical system, equals the core diameter of the system fibre (2).

2. A coupling element as claimed in Claim 1, characterised in that the casing thickness of the glass fibre (1) of the coupling element, which fibre is to be connected to a system fibre (2) of the optical system, amounts to less than 5 μm, with fluctuations in the casing thickness of the glass fibre (1) having a permitted tolerance in the magnitude of 100 %.

3. A coupling element as claimed in Claim 1 or 2, characterised in that the glass fibres of the coupling element are embedded in a medium or material whose refractive index is lower than that of the glass fibre casing.

4. A coupling element as claimed in Claim 3, characterised in that the medium is an optical adhesive.

5. A coupling element as claimed in one of Claims 1 to 4, characterised in that the materials used for the coupling element have approximately the same thermal coefficient of expansion.

## Revendications

1. Elément de couplage permettant l'injection par couplage et/ou l'extraction par découplage de lumière dans et/ou hors de fibres de verre, dans lesquelles deux fibres de verre disposées côte-à-côte et une troisième fibre de verre disposée en série avec une des deux fibres de verre sont maintenues sur un support, et dans lequel les deux fibres de verre disposées côte-à-côte sont réunies le long d'un élément s'étendant jusqu'à une extrémité de ces deux fibres de verre, tournée vers la troisième fibre de verre, et dans lequel au niveau de cette extrémité, les surfaces respectives d'extrémité des deux fibres de verre réunies sont simultanément en aboutement contre une même surface d'extrémité de la troisième fibre de verre, et ce au moins sur une partie de cette surface d'extrémité, caractérisé par le fait que le diamètre d'ensemble d'une fibre de verre (1) de l'élément de couplage, qui doit être reliée à une fibre (2) d'un système optique, est égale au diamètre du noyau de cette fibre (2).

2. Elément de couplage selon la revendication 1, caractérisé par le fait que l'épaisseur de l'enveloppe d'une fibre de verre (1) de l'élément de couplage qui doit être reliée à une fibre (2) du système optique, est inférieure à 5 μm, des variations de l'épaisseur de cette fibre de verre (1) de l'ordre de 100 % étant autorisées.

3. Elément de couplage selon la revendication 1 ou 2, caractérisé par le fait que les fibres de verre de l'élément de couplage sont insérées dans un milieu ou un matériau dont l'indice de réfraction est inférieur à celui de cette enveloppe de la fibre de verre.

4. Elément de couplage selon la revendication 3, caractérisé par le fait que le milieu est une colle optique.

5. Elément de couplage selon l'une des revendications 1 à 4, caractérisé par le fait que les matériaux utilisés pour l'élément de couplage possèdent approximativement les mêmes coefficients de dilatation thermique.

# F I G 1

# F I G 2